# EUROPÄISCHE PATENTANMELDUNG

(11) **EP 0 787 571 A1**
(43) Veröffentlichungstag der Anmeldung: **06.08.1997**
(21) Anmeldenummer: 97101325.5
(22) Anmeldetag: 29.01.1997
(51) Int. Cl.: B29C 45/27

(54) **Heisskanal-Verteilersysteme für Spritzgiessanlagen**

(30) Priorität: 05.02.1996 DE 19603947
(71) Anmelder: INCOE INTERNATIONAL, INC., D-63322 Rödermark (DE)
(72) Erfinder: Gauler, Kurt Ing., 64390 Erzhausen (DE)
(74) Vertreter: Boecker, Joachim, Dr.-Ing.

(57) **Zusammenfassung**

Heißkanal-Verteilersysteme für Spritzgießanlagen, deren Schmelzekanalstrecken aus vorgefertigen Einzelbauteilen (Profilstücken) zusammengesetzt sind, die in Strömungsrichtung der Schmelze mindestens einen Fließkanal (11) aufweisen. Gemäß der Erfindung haben die die Profilstücke (1,2,3,4) einen rechteckigen, vorzugsweise quadratischen, Querschnitt. Die aneinandergrenzenden Profilstücke liegen stumpf aneinander und sind durch Schrauben miteinander verbunden, die sich in einem der beiden Profilstücke der Verbindungsstelle parallel zum Fließkanal (11,21,31,41) durch das Profilstück erstrecken und in dem anderen der beiden Profilstücke der Verbindungsstelle sich senkrecht zu dem Fließkanals durch das Profilstück erstrecken, wobei Profilstücke, gegen deren Seitenwand ein anderes Profilstück mit seiner Stirnwand anliegt, mit einer Seitenbohrung (16) versehen sind, die die Fließkanäle der beiden Profilstücke miteinander verbindet. Die Profilstücke sind an zwei gegenüberliegenden Außenseiten mit Nuten (22) versehen, in denen Rohrheizkörper (51) eingelegt sind.

## Beschreibung

Die Erfindung betrifft ein Heißkanal-Verteilersystem für Spritzgießanlagen gemäß dem Oberbegriff des Anspruches 1.

In der Spritzgießtechnik wird die von der Spritzgießmaschine gelieferte Kunststoffschmelze in der Regel auf mehrere Düsen verteilt, durch welche die Schmelze über die Anschnittpunkte des Spritzwerkzeugs in die Kavitäten des Spritzwerkzeugs eingespritzt wird. Die Verteilung der Schmelze auf die verschiedenen Düsen erfolgt über einen Verteilerblock, der beheizt wird, um die Schmelze auf ihrem Weg in die Kavitäten des Spritzwerkzeugs auf der für den Gießvorgang erforderliche Temperatur zu halten. Aus dem gleichen Grunde sind auch die Düsen als beheizte Heißkanaldüsen ausgebildet.

Der Verteilerblock wird zwischen der zum Spritzwerkzeug gehörenden Düsenplatte und einer Werkzeugkopfplatte eingespannt. Die Düsen stecken entweder in der Düsenplatten und werden dort gehalten, oder sie sind bei den sogenannten Kompaktsystemen mit dem Verteilerblock zu einer festen Einheit verschraubt. Die Zufuhr der Schmelze von der Spritzgießmaschine zum Verteilerblock erfolgt über eine sogenannte Angußbuchse. Das System aus Verteilerblock, und Angußbuchse wird als "Verteilersystem" bezeichnet. Bei Kompaktsystemen gehören auch die Düsen zum "Verteilersystem". Es ist wichtig, daß die Wände der Fließkanäle des Verteilersystems keine Unebenheiten aufweisen, insbesondere keine Stufen, scharfe Kanten oder Spalten an den Übergangs- und Umlenkungsstellen.

Da die Anzahl der Kavitäten und ihre gegenseitige Lage von Spritzwerkzeug zu Spritzwerkzeug stark variieren können, sind viele Verteilersysteme unterschiedlicher Ausführung erforderlich.

Um die Herstellung solcher Verteilersysteme zu rationalisieren und zu beschleunigen, ist es bereits bekannt, standardisierte Verteilerblöcke zu bauen. Diese bestehen aus langgestreckten quaderförmigen metallischen Verteilerblockstücken mit einem oder zwei parallelen Fließkanälen, die sich von einem Ende bis zum anderen Ende des Verteilerblockstückes erstrecken. Mit Hilfe von sogenannten Umlenkstopfen, die in die offenen Enden des Fließkanals eingesetzt werden, können nahe den Enden des langgestreckten Verteilerblockstückes senkrecht zur Längsachse des Fließkanals seitliche Austrittsöffnungen des Fließkanal gebohrt werden. Die genaue Lage dieser Austrittsöffnungen von den Enden des Verteilerblockstückes kann individuell durch entsprechende Kürzung des Umlenkstopfens gewählt werden. An zwei gegenüberliegenden Seiten dieser standardisierten Verteilerblockstücke sind Nuten zur Einlegung von Rohrheizkörpern eingefräst. Diese Verteilerblöcke werden aus einer beispielsweise 30 bis 50 mm dicken Metallplatte ausgefräst, wobei man aus Gründen der Erzielung einer möglichst gleichmäßigen Temperatur längs der Fließkanäle bestrebt ist, die Ausfräsung so vorzunehmen, daß die Fließkanäle an allen Stellen von möglichst gleichviel Material umgeben sind. Dies bedeutet, daß der Fräsvorgang ein sehr aufwendiger Schritt bei der Herstellung des Verteilerblockes ist.

Der Einbau der Umlenkstopfen ist ebenfalls relativ aufwendig und erfordert eine sorgfältige Arbeitsweise sowie den Einsatz kugelförmiger Fräser. Da sich die Länge des standardisierten Verteilerblockstückes durch das Kürzen und Einfügen der Umlenkstopfen nicht ändert, ist seine Länge oft unnötig größer, als dies mit Rücksicht auf die Lage der Düsen erforderlich wäre. Aus diesem Grunde muß eine ganze Reihe solcher standardisierter Verteilerblockstücke unterschiedlicher Länge auf Lager gehalten werden, von denen jedes nur innerhalb eines bestimmten Längenbereiches verwendbar ist.

Zur Vermeidung der vorgenannten Schwierigkeiten ist aus der EP 162 412 A2 bereits ein Heißkanal-Verteilersystem bekannt, das aus vorgefertigten Modulstücken aufgebaut ist, wodurch es möglich ist, mit einer geringen Anzahl von vorgefertigten Bauteilen viele unterschiedliche Verteilersysteme aufzubauen. Der Grundgedanke dieses bekannten Modulsystems besteht in der Verwendung von quaderförmigen gewissermaßen punktförmigen Blöcken, wie Zentralblöcken, Verbindungsblöcken und Einspritzblöcken, und die Abstände zwischen diesen Blöcken überbrückenden zylindrischen Abstandselementen. Dabei stellen die genannten Blöcke im Vergleich zu den Abstandselementen große Materialansammlungen dar, über deren relativ große Oberfläche mehr Wärme als von den Abstandselementen abgegeben wird. Die Beheizung erfolgt durch Innenheizpatronen, die von außen in die Fließkanäle eingeschoben werden. Diese Form der Heizung ist aufwendig und kann eine gleichmäßige Temperatur an allen Stellen der Fließkanäle nicht garantieren. Die Verbindung zwischen den Modulen erfolgt durch Steckpassungen, die mit großer Genauigkeit gefertigt werden müssen.

Ein Heißkanal-Verteilersystem, das aus einzelnen Bauteilen aufgebaut ist, ist ferner aus der DE 43 20 584 A1 bekannt. Auch hier erfolgt die Verbindung der einzelnen Bauteile des Heißkanal-Verteilers mit Rohrsteckverbindungen. Bei diesem System weist eine Rohrsteckverbindung jeweils zwei miteinander fluchtende, den Fließkanal umschließende Rohrenden auf, die durch eine Dehnfuge voneinander getrennt sind. Die Rohrenden werden durch einen die Dehnfuge umschließenden Kühlring zusammengehalten. Die Heizung erfolgt durch äußere um einzelne Abschnitte gelegte Heizmanschetten, die von Rohrschellen gehalten werden. Eine gleichmäßige Beheizung des Fließkanals wird bei diesem Verteilersystem nicht erzielt. Insbesondere im Bereich der aufwendigen Verbindung zwischen zwei Abschnitten, wo bewußt eine Kühlung zur Dichtung der Dehnfuge vorgesehen ist, erleidet die Schmelze eine starke Abkühlung.

Der Erfindung liegt die Aufgabe zugrunde, Heißkanal-Verteilersysteme für Spritzgießanlagen zu entwickeln, welche in verschiedenen Ausführungen in aus weitgehend vorgefertigbaren Teilen kostengünstig und schnell fertigbar sind und sich durch eine weitgehend gleichmäßige Beheizung der Fließkanäle auszeichnet.

Zur Lösung dieser Aufgabe werden Heißkanal-Verteilersysteme für Spritzgießanlagen gemäß dem Oberbegriff des Anspruches 1 vorgeschlagen, welches erfindungsgemäß die im kennzeichnenden Teil des Anspruches 1 genannten Merkmale haben.

Weitere Ausgestaltungen der Erfindung sind in Unteransprüchen genannt.

Die Heißkanal-Verteilersysteme gemäß der Erfindung sind aus Profilstücken aufgebaut, die so beschaffen sind, daß durch Kombination weniger, weitgehend vorgefertigter Profilstücktypen in kurzer Zeit Verteilersysteme aufgebaut werden können, die sich hinsichtlich Gestalt und Größen stark voneinander unterscheiden können.

Die Profilstücke haben vorzugsweise alle den gleichen Querschnitt, so daß die Materialansammlung senkrecht zum Querschnitt des Fließkanals an fast allen Stellen des Fließkanals annähernd gleich groß ist. Da die Rohrheizkörper praktisch an allen Stellen der Fließkanäle parallel zu diesen geführt werden, findet somit an allen Stellen der Fließkanäle eine annähernd gleich große Wärmezufuhr pro Längeneinheit der Fließkanäle statt. Zu den Profilstücken gehören Mittenprofilstücke, Angießbuchsenprofilstücke, Umlenkprofilstücke und Heißkanalprofildüsen.

Die Mittenprofilstücke können aus langen Stangen gefertigt werden, die von einem Ende zum anderen mit einem zentralen Fließkanal und an den Außenseiten mit durchgehenden Nuten zum Einlegen von Rohrheizkörpern versehen sind. Beim Bau eines individuellen Verteilersystems kann dann von einem solchen Stangenmaterial ein in der Länge genau bemessenes Stück abgesägt werden und entweder mit fast vollständig vorgefertigten Umlenkprofilstücken kombiniert werden oder mit herkömmlichen Umlenkstopfen und Seitenkanälen zum Anschluß von Spritzdüsen versehen werden.

Anhand der in den Figuren gezeigten Ausführungsbeispiele soll die Erfindung näher erläutert werden. Es zeigen
- Figur 1a: ein einfaches Ausführungsbeispiel eines Heißkanal-Verteilersystems gemäß der Erfindung,
- Figur 1b: einen Schnitt durch das Verteilersystem der Figur 1a längs der Linie A-A in Figur 1a,
- Figur 1c: einen Schnitt durch das Verteilersystem der Figur 1a längs der Linie B-B in Figur 1a,
- Figur 1d: einen Schnitt durch das Verteilersystem der Figur 1a längs der Linie C-C in Figur 1b,
- Figur 2: in vergrößertem Maßstab ein Ausführungsbeispiel einer Profildichtung an einer Verbindungsstelle zwischen zwei Profilstücken,
- Figur 3a-3d: in schematisierter Darstellung Beispiele von Heißkanal-Verteilersystemen gemäß der Erfindung,
- Figur 4: die Verbindung zwischen zwei Mittenprofilstücken, wie sie beispielsweise in den Verteilersystemen nach den Figuren 3b und 3d vorkommen,
- Figuren 5a-5c: schematisch den Verlauf der Rohrheizkörperkreise in einem Verteilersystem nach Figur 3b, und zwar

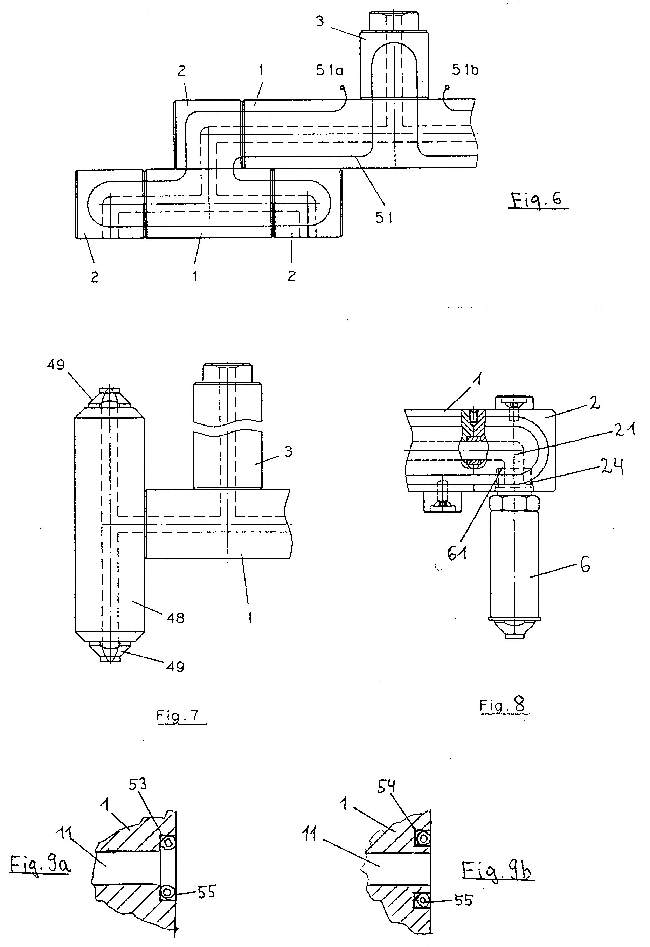

Figur 5a in Draufsicht,
Figur 5b in Richtung des Pfeiles A in Figur 5a,
Figur 5c im Schnitt längs der Linie B-B in Figur 5a,
- Figur 6: den grundsätzlichen Aufbau eines brückenbalancierten Verteilersystems gemäß der Erfindung,
- Figur 7: den grundsätzlichen Aufbau eines Zwei-Etagenverteilersystems gemäß der Erfindung,

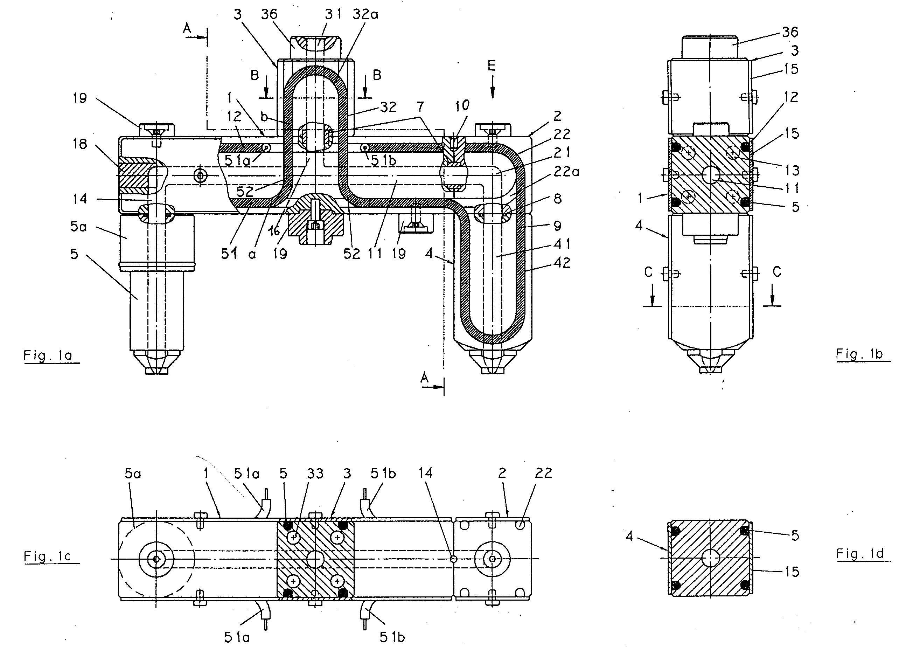

- Figur 8: eine Variante des Ausführungsbeispiels nach den Figuren 1a bis 1d mit einer einschraubaren Düse zum Aufbau eines Kompaktsystems.
- Figuren 9a und 9b: ein anderes Ausführungsbeispiel zur Erzielung einer Dichtung zwischen zwei aneinandergrenzender Profilstücke.

Das in den Figuren 1a bis 1d gezeigte Heißkanal-Verteilersystem enthält ein Mittenprofilstück 1, ein Umlenkprofilstück 2, ein zentrales Angußbuchsenprofilstück 3 und eine Heißkanalprofildüse 4. Außerdem zeigen diese Figuren die Verwendung einer konventionellen Heißkanaldüse 5 bei einem Heißkanal-Verteilersystem gemäß der Erfindung ohne Verwendung eines Umlenkprofilstückes.

Das Mittenprofilstück 1 besteht aus einem massiven metallischen Profilstück mit rechteckigem, vorzugsweise quadratischem, Querschnitt. In Längsrichtung verläuft durch das Profilstück ein zentraler Fließkanal 11, der sich über die ganze Länge des Profilstücks erstreckt. An zwei gegenüberliegenden langen Außenseiten des Profilstücks sind je zwei sich ebenfalls über die gesamte Länge des Profilstücks erstreckende Nuten 12 vorhanden.

Das Angußbuchsenprofilstück 3 ist nach den gleichen Prinzip wie das Mittenprofilstück 1 ausgebildet. Es hat ebenfalls einen vorzugsweise quadratischen Querschnitt mit einem zentralen Fließkanal 31 und ist an zwei gegenüberliegenden Seiten mit Nuten 32 für Rohrheizkörper versehen. Am oberen Ende ist ein zylindrischer Stutzen 36 zum Anschluß an die Spritzgießmaschine vorhanden. Zur Befestigung des Angußbuchsenprofilstücks 3 am Mittenprofilstück 1 ist ersteres mit vorzugsweise vier parallel zum Fließkanal 31 verlaufenden Bohrungen 33 zur Durchführung von Schrauben versehen, die in entsprechend positionierte Gewindelöchern im Mittenprofilstück einschraubbar sind. Umgekehrt können die Gewindelöcher auch im unteren Ende des Angußbuchsenprofilstücks 3 vorgesehen werden und die Bohrungen zur Durchführung der Schrauben durch das Mittenprofilstück senkrecht zu seiner Längsrichtung verlaufen. Zur Verbindung der Fließkanäle 11 und 31 ist das Mittenprofilstück mit einem Seitenkanal 16 versehen.

Am rechten stirnseitigen Ende des Mittenprofilstücks 1 ist ein Umlenkprofilstück 2 mit vorzugsweise vier Schrauben befestigt, die parallel zur Längsachse des Mittenprofilstücks 1 durch Bohrungen entsprechend den Bohrungen 33 beim Angußbuchsenprofilstück 3 verlaufen und in entsprechende Gewindelöcher 13 des Mittenprofilstücks eingeschraubt sind. Im Umlenkprofilstück 2 ist ein Fließkanal 21 vorhanden, der zunächst mit dem Fließkanal 11 des Mittenprofilstücks fluchtet und dann um 90° im Sinne der Figur 1a nach unten abbiegt.

An die nach unten gerichtete Fläche des Umlenkprofilstücks 2 ist eine im Querschnitt ebenfalls quadratische Heißkanalprofildüse 4 angeschlossen, deren Fließkanal 41 mit dem des Umlenkprofilstücks fluchtet. Die Befestigung der Heißkanalprofildüse kann durch Schrauben erfolgen, die parallel zur Richtung des Pfeiles E in Figur 1a durch das Umlenkprofilstück 2 verlaufen und in entsprechen Gewindelöcher der Heißkanalprofildüse 4 eingeschraubbar sind.

Das Umlenkprofilstück 2 und die Heißkanalprofildüse 4 sind ebenfalls auf zwei Seiten mit Nuten zum Einlegen von Rohrheizkörpern versehen. Bei der Heißkanalprofildüse 4 schließen sich die beiden an einer Seite liegenden Nuten bogenförmig nahe dem Düsenaustrittsende, während die Nuten des Umlenkprofilstücks 2 einen Bogen von je 90 Grad durchlaufen. Zusätzlich oder außschließlich können sich auch die beiden Nutpaare des Umlenkprofilstücks 2 über einen Nutabschnitt 22a bogenförmig schließen. Dies ist erforderlich, wenn statt einer Heißkanalprofildüse 4 eine in der Düsenplatte steckende konventionelle Heißkanaldüse 5 an das Umlenkprofilstück 2 angeschlossen wird (siehe folgender Absatz).

Im linken Teil der Figur 1a ist der Anschluß einer konventionellen zylindrischen Heißkanaldüse 5 mit Heizmanschette 5a direkt an ein Mittenprofilstück, also ohne Verwendung eines Umlenkprofilstückes gezeigt. In diesem Falle errfolgt die Umlenkung des Fließkanals im Mittenprofilstück in herkömmlicher Weise mittels eines Umlenkstopfens 15 und Bohren eines Seitenkanals 14.

Es versteht sich, daß die an der linken Seite gezeigte konventionelle Heißkanaldüse 5 durch eine Heißkanalprofildüse 4 gemäß der Erfindung ersetzt werden kann und/oder die auf der rechten Seite gezeigte Heißkanalprofildüse 4 durch eine konventionelle Heißkanaldüse 5 ersetzt werden kann, ohne daß der restliche Aufbau des Verteilersystems aus Mittenprofilstück 1, Umlenkprofilstück 2 und Angußbuchsenprofilstück 3 eine Änderung erfährt mit Ausnahme der Notwendigkeit, an der linken Seite in Figur 1a die Nuten des Mittenprofilstücks zum Anschluß an die Nuten der Heißkanalprofildüse umzulenken, und an der rechten Seite der Figur 1a den Rohrheizkörper über die Nuten im Umlenkprofilstück zu schließen.

Schließlich ist es auch möglich, die Heißkanal-Verteilersysteme gemäß der Erfindung als sogenannte Kompaktsysteme auszuführen, bei denen die Spritzdüsen fest in den Verteilerblock eingeschraubt sind. Figur 8, die dem rechten Teil der Figur 1a entspricht, zeigt eine solche Ausführung. In diesem Falle muß entweder lediglich das Umlenkprofilstück 2 am düsenseitigen Ende des Fließkanals 21 mit einer Gewindebohrung versehen werden, in die eine konventionelle einschraubbare Heißkanaldüse 6 mit ihrem Gewindezapfen 61 einschraubar ist oder, wenn auf ein Umlenkprofilstück, wie im linken Teil der Figur 1a verzichtet wird, das Mittenprofilstück an der Stelle des Seitenkanals in Figur 1a mit einer solchen Gewindebohrung versehen werden.

Die Nuten für die Rohrheizkörper sind an den einzelnen Profilstücken vorzugsweise so angeordnet, daß sie an den Übergängen zwischen benachbarten Profilstücken ineinander übergehen. In diese Nuten ist ein vorzugsweise kontinuierlicher, einen geschlossenen Heizkreis bildender Rohrheizkörper 51 eingelegt, der bei 51a und 51b in das Verteilersystem eintritt beziehungsweise aus diesem austritt. Ein entsprechender Rohrheizkörperkreis ist auf der gegenüberliegenden Seite des Verteilersystems in Figur 1a vorhanden. Die Anschlußenden 51a,51b der beiden Rohrheizkörperkreise sind in Figur 1c erkennbar. In Figur 1a sind die den Rohrheizkörper 51 aufnehmenden Abschnitte der Nuten leicht schattiert dargestellt, um die herstellungsbedingt vorhandenen, aber nicht vom Rohrheizkörper belegten Nutabschnitte besser erkennen zu können. Bei Anwendung der konventionellen Umlenkstopfentechnik, wie links in Figur 1a gezeigt, sind die Nuten am Ende des Mittenprofilstücks entsprechend miteinander verbunden, wie am Angußbuchsenprofilstück 3 bei 32a.

Die die Rohrheizkörper aufnehmenden Seiten der Profilstücke sind zweckmäßigerweise durch aufschraubare Abdeckbleche 15 abgedeckt. Hierdurch erzielt man neben der Schaffung glatter Außenflächen zugleich eine bessere Halterung der eingelegten Rohrheizkörper sowie eine Herabsetzung der Wärmeabstrahlung nach außen. Zur besseren Halterung der Rohrheizkörper, insbesondere während der Montage, sind die Nuten an ihrem offenen Ende leicht verengt.

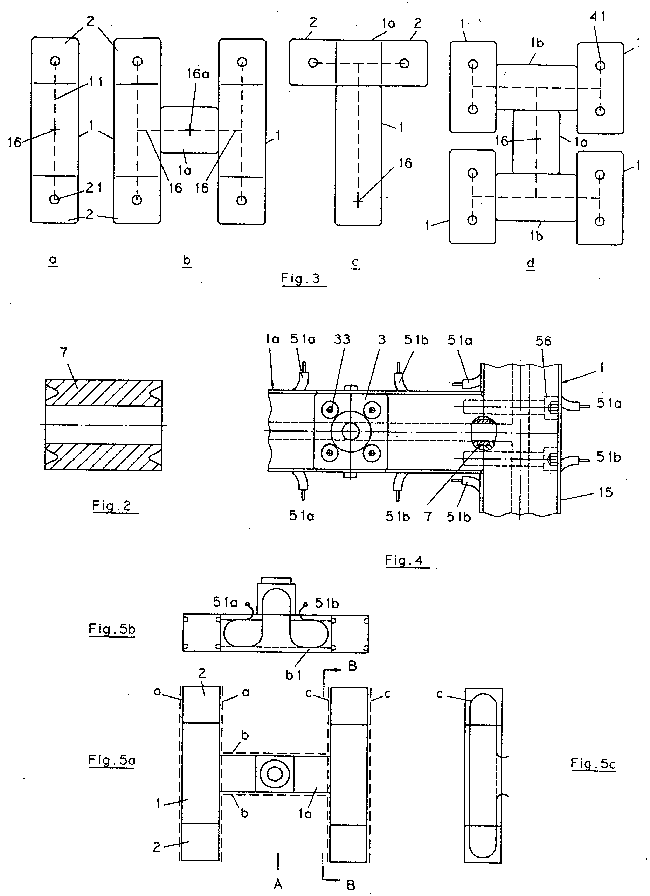

Zur Herstellung eines glatten und dichten Überganges zwischen den Fließkanälen der aneinandergrenzenden Profilstücke 1, 2 und 3 können metallische Profildichtungen 7 verwendet werden. Eine solche Profildichtung ist in Figur 2 vergrößert dargestellt. Die hierfür erforderliche Erweiterung des Durchmessers des Fließkanals an der Übergangsstelle kann an vorgefertigten Umlenkprofilstücken und Angußbuchsenprofilstücken bereits vorhanden sein. An den Mittenprofilstücken werden diese Erweiterungen zwecks Sicherstellung stufenfreier Übergänge erst beim Zusammenbau des Verteilersystems gefertigt. Statt der metallischen Profildichtung 7 kann zur Dichtung auch ein für solche Zwecke bereits bekannter hohler metallischer O-Ring 55 verwendet werden, der in die Stirnseite eines der aneinandergrenzenden Profilstücke eingelegt wird, und zwar entweder in eine den Fließkanal 11 vorzugsweise konzentrisch umgebende Nut 54 (Figur 9b) oder in eine den Fließkanal 11 ringförmig erweiternde Ausnehmung 53, wie dies Figur 9b zeigt.

Ein Profilzentrierstift 10, der beim ersten Zusammenbau eines Verteilerblocks gesetzt wird, stellt sicher, daß später nach einer Zerlegung des Verteilerblocks beim Wiederzusammenbau die exakte ursprüngliche Winkellage zwischen Mittenprofilstück und Umlenkprofilstück wieder eingenommen wird.

Bei den mit 19 bezeichneten Teilen handelt es sich um Stützen und Zentriermittel für die Einspannung des Verteilersystems zwischen der Werkzeugkopfplatte und der Düsenplatte (beide nicht dargestellt).

Ein Vorteil eines Heißkanal-Verteilersystems gemäß der Erfindung besteht darin, daß eine weitgehende Vorfertigung und Standardisierung der Bauteile möglich ist, wodurch sowohl die Kosten als auch die für den Aufbau eines individuellen Verteilersystems erforderliche Zeit wesentlich vermindert werden. Das Mittenprofilstück kann von einer beliebig langen vorgefertigten Profilstange in einer gewünschten Länge abgeschnitten werden. In diesem Falle kann die Seitenbohrung 16 des Fließkanals für den Anschluß des Angußbuchsenprofilstücks 3 erst beim Bau eines Verteilersystems mit vorgegebenen Abmessungen gefertigt werden. Gleiches gilt für folgende Fertigungsschritte: Herstellung der Teilstrecken der Rohrheizkörpernuten zwischen den Punkten a und b in Figur 1a, welche die Nutverbindung zwischen dem Mittenprofilstück 1 und dem Angußbuchsenprofilstück 3 herstellen; Herstellung der Gewindelöcher oder Bohrungen im Mittenprofilstück zur Aufnahme der Schrauben zur Befestigung des Angußbuchsenprofilstücks 3 und der Umlenkprofilstücke 2 am Mittenprofilstück 1; Aufweitung der Austrittsstellen des Fließkanals aus dem Mittenprofilstück zum Einsetzen einer Profildichtung 7 oder eines O-Ringes.

Von dem vorgenannten Stangenmaterial für die Mittenprofilstücke können auch Stücke erforderlicher Länge für Angußbuchsenprofilstücke 3 abgeschnitten werden. Zur Fertigstellung der Angußbuchsenprofilstücke sind dann noch der Anschlußstutzen 36, die bogenförmige Verbindung 32a zwischen den Nutpaaren 32 und die Gewindelöcher oder Bohrungen 33 für die Befestigungsschrauben zu fertigen.

Es ist auch möglich, bereits auf ein oder mehrere Maximalmaße zugeschnittene Mittenprofilstücke vorzufertigen, bei denen dann in der Mitte oder an einer anderen Stelle bereits der Seitenkanal 16, die Nutverbindung zwischen den Punkten a und b (Figur 1a) und die Gewindelöcher oder Durchführbohrungen zum Anschrauben des Angußbuchsenprofilstücks 3 und der Umlenkprofilstücke 2 vorgefertigt sind. Es werden dann beim Bau eines Verteilerblocks lediglich die freien Enden des vorgefertigten Mittenprofilstücks auf die im konkreten Fall erforderliche Länge gekürzt. Die Gewindelöcher 13 zum Anschrauben des Angußbuchsenprofilstücks 3 können ebenfalls vorgefertigt werden, wenn sie mit einer der möglichen Kürzung der Enden entsprechenden Überlänge gefertigt werden.

Das Angußbuchsenprofilstück 3 kann ebenfalls in einer oder mehreren maximalen Längen, einschließlich der Befestigungslöcher, des Anschlußstutzen 36 und der bogenförmigen Verbindung der Nuten für die Rohrheizkörper, vollständig vorgefertigt werden, wobei beim Bau eines Verteilersystems nur noch das im Sinne der Figur 1a untere Ende der Angußbuchsenprofilstücks 3 auf die gewünschte Länge gekürzt zu werden braucht.

Die Umlenkprofilstücke 2 können vollständig vorgefertigt werden, einschließlich der Löcher zur Durchführung der Schrauben zur Befestigung am Mittenprofilstück 1 beziehungsweise an der Heißkanalprofildüse 4.

Die Heißkanalprofildüse 4 kann entsprechend dem Angußbuchsenprofilstück 3 in einer oder mehreren maximalen Längen vorgefertigt werden, wobei beim Aufbau eines konkreten Verteilerblocks lediglich das obere Ende auf die gewünschte Länge gekürzt zu werden braucht.

Die Figuren 1a bis 1d zeigen ein sehr einfach aufgebautes Verteilersystem gemäß der Erfindung, das die sogenannte I-Form hat. Figur 3a zeigt ein solches Verteilersystem in vereinfachter Darstellung, wobei die Fließkanäle 16, 11 und 21 nur symbolisch angedeutet sind.

Figur 3b zeigt ein H-Verteilersystem gemäß der Erfindung, in welchem zwei I-Verteilersysteme nach Figur 3a zusammengefaßt sind. Dabei sind die Seitenkanäle 16 nicht nach oben zum Anschluß an das Angußbuchsenprofilstück 3 herausgeführt, sondern zur Seite zum Anschluß an den Fließkanal eines weiteren Mittenprofilstücks 1a, an dessen Seitenkanal 16a das zentrale Angußbuchsenprofilstück 3 angeschlossen ist. Figur 4 zeigt die Verbindung zwischen den beiden Mittenprofilstücken 1a und 1 in Detail. Es werden die gleichen Verschraubungen 56 und Profildichtungen 7 beziehungsweise O-Ring-Dichtungen verwendet, wie sie anhand von Figur 1 für die Befestigung der Umlenkprofilstücke und Angußbuchsenprofilstücke erläutert wurden.

Figur 3c zeigt ein T-Verteilersystem, das aus zwei Mittenprofilstücken 1 und 1a und zwei Umlenkprofilstücken 2 aufgebaut ist, wobei bei 16 das Angußbuchsenprofilstück angeschlossen wird. Insbesondere, wenn der obere Balken des T, wie in Figur 3c gezeigt, sehr kurz ist, kann auf die Verwendung von Umlenkprofilstücken 2 verzichtet werden, und die Düsen können direkt an das Mittenprofilstück mit Hilfe von konventionellen Umlenkstopfen 18 angebracht werden, wie dies im linken Teil der Figur 1a gezeigt ist und oben erläutert wurde.

Figur 3d zeigt ein sogenannten H-balancierten Verteilersystem, bei dem die Entfernung von der zentralen Angußstelle 16 zu jeder der acht Steigbohrungen 41 gleich weit entfernt ist. Die hier gezeigten vier Mittenprofilstücke 1 mit je zwei konventionelle Heißkanaldüsen oder Heißkanalprofildüsen sind paarweise über je ein Mittenprofilstück 1b an ein zentrales Mittenprofilstück 1a angeschlossen, von welchem der Seitenkanal 16 zur Angußbuchsenprofilstück 3 abgeht. Je nach Länge der vier Mittenprofilstücke 1 können die Heißkanal- oder Heißkanalprofildüsen entweder indirekt über ein Umlenkprofilstück oder nach der herkömmlichen Umlenkstopfentechnik direkt an das Mittenprofilstück angeschlossen werden.

Bei den Anordnungen nach den Figuren 3b bis 3d liegen, anders als bei dem Verteilersystem nach Figuren 1a-1d, die Fließkanäle nicht alle in derselben Ebene und die Nuten für die Rohrheizkörper nicht alle in demselben Paar paralleler Ebenen. Vielmehr liegen die Nuten für die Rohrheizkörper in zwei oder mehr Paaren paralleler Ebenen. Für ein H-Verteilersystem gemäß Figur 3b sind dies drei Paare paralleler Ebenen in Figur 5a durch gestrichelte Linien a, b, c angedeutet. Figur 5b zeigt eine der Ebenen b in Seitenansicht der Figur 5a in Richtung des Pfeils A, und der vollausgezogene Kurvenzug b1 läßt den Verlauf des Rohrheizkörpers erkennen. Figur 5c Zeigt eine der Ebenen c im Schnitt längs der Linie B-B in Figur 5a, und der vollausgezogene Kurvenzug c läßt den Verlauf des Rohrheizkörpers erkennen (siehe auch die Anschlüsse 51a und 51b in Figur 4). Die Rohrheizkörper in den beiden parallelen Ebenen eines Paares a, b und c werden zweckmäßigerweise zu je einem elektrischen Kreis in Reihe geschaltet, so daß sich drei unabhängig regelbare Heizstromkreise ergeben.

Figur 6 zeigt ein brückenbalancierten Verteilersystem gemäß der Erfindung. Die Figur zeigt nur eine Seite dieser symmetrischen Brückenanordnung und das zentrale Angußbuchsenprofilstück 3. Man erkennt, daß in diesem Falle alle Fließkanäle in derselben Ebene liegen. Das gleiche gilt für die auf je einer Seite der Bauelemente vorhandenen Nuten für die Rohrheizkörper. Folglich lassen sich sämtliche Rohrheizkörper in nur einem Paar paralleler Ebenen unterbringen, wie dies in Figur 6 durch den zusammenhängenden Nutkanal 51 mit den Anschlüssen 51a und 51b angedeutet ist. In der Praxis wird man jedoch wegen des unterschiedlichen Wärmebedarfs der einzelnen Kanalabschnitte mehrere elektrische Kreise bilden, die dann unterschiedlich beheizt und geregelt werden können.

Figur 7 zeigt ein sogenannten Zwei-Etagen-Verteilersystem, d.h. ein Verteilersystem, bei dem die Düsenausgänge in zwei verschiedenen Ebenen liegen. Die Doppelheißkanaldüse 48 kann dabei ebenfalls aus einem Mittenprofilstück aufgebaut sein, an dessen Enden Düsenmundstücke 49 aufgesetzt sind.

Als Material für die Profilstücke können die üblichen für Heißkanal-Verteilersystem verwendeten Werkstoffe verwendet werden. Als ein mögliche Bemessung für die Querschnitte der Profilstücke können 35 x 35 mm genannt werden. Grundsätzlich können die Verteilersysteme gemäß der Erfindung auch aus Profilstücken aufgebaut sein, die zwei oder mehr paralle Fließkanäl aufweisen.

## Patentansprüche

1. Heißkanal-Verteilersysteme für Spritzgießanlagen, deren Schmelzekanalstrecken aus vorgefertigen Einzelbauteilen (Profilstücken) zusammengesetzt sind, die in Strömungsrichtung der Schmelze mindestens einen Fließkanal (11) aufweisen,
**dadurch gekennzeichnet**,
- daß die Profilstücke (1,2,3,4) einen rechteckigen, vorzugsweise quadratischen, Querschnitt haben,
- daß die aneinandergrenzenden Profilstücke stumpf aneinander liegen und durch Schrauben (56) miteinander verbunden sind, die sich in einem der beiden Profilstücke der Verbindungsstelle parallel zum Fließkanal (11,21,31,41) durch das Profilstück erstrecken und in dem anderen der beiden Profilstücke der Verbindungsstelle senkrecht zu zumindest einem Teil des Fließkanals durch das Profilstück erstrecken, wobei Profilstücke, gegen deren Seitenwand ein anderes Profilstück mit seiner Stirnwand anliegt, mit einer Seitenbohrung (16) versehen sind, die die Fließkanäle der beiden Profilstücke miteinander verbindet,
- und daß die Profilstücke an mindestens einer Außenseite, vorzugsweise an zwei gegenüberliegenden Außenseiten, Nuten (22) aufweisen, in denen Rohrheizkörper (51) eingelegt sind.

2. Heißkanal-Verteilersysteme nach Anspruch 1, **dadurch gekennzeichnet**, daß sie aufgebaut sind aus
- Mittenprofilstücken (1) und Angußbuchsenprofilstücken (3), deren Fließkanäle (11,31) sich geradlinig von einem Stirnende zum anderen Stirnende der Profilstücke erstrecken,
- und vorzugsweise würfelförmigen Umlenkprofilstücken (2) zur stirnseitigen Befestigung am Ende eines Mittenprofilstückes (1), welche Umlenkprofilstücke einen um vorzugsweise 90 Grad umlenkenden Fließkanal (21) aufweisen, der bei stirnseitiger Anlage des Umlenkprofilstückes am Mittenprofilstück mit dem Fließkanal (11) des Mittenprofilstückes fluchtet.

3. Heißkanal-Verteilersystem nach einem der Ansprüche 1 oder 2, **dadurch gekennzeichnet**, daß eine an ein Umlenkprofilstück (2) oder an eine Seitenbohrung (14) eines Mittenprofilstückes (1) angeschlossene Spritzdüse als Heißkanalprofildüse (4) ausgebildet ist, welche einen rechteckigen, vorzugsweise quadratischen, Querschnitt hat und an mindestens einer Außenseite, vorzugsweise an zwei gegenüberliegenden Außenseiten, Nuten (42) aufweist, in denen Rohrheizkörper (51) eingelegt sind.

4. Heißkanal-Verteilersystem nach einem der vorhergehenden Ansprüche, **dadurch gekennzeichnet**, daß an einem oder beiden Stirnende eines Mittenprofilstücks (1) ein an sich bekannter Umlenkstopfen (18) in den Fließkanal eingesetzt ist und an eine Seitenbohrung (14) im Mittenprofilstück eine konventionelle Spritzdüse (5) oder eine Heißkanalprofildüse (4) angeschlossen ist.

5. Heißkanal-Verteilersystem nach einem der vorhergehenden Ansprüche, **dadurch gekennzeichnet**, daß Umlenkprofilstücke (2) am düsenseitigen Ende des Fließkanals (21) mit einer Gewindebohrung (24) zur Aufnahme einer konventionellen einschraubbaren Heißkanaldüse (6) versehen sind (Figur 8).

6. Heißkanal-Verteilersystem nach Anspruch 4, **dadurch gekennzeichnet**, daß an der Stelle der genannten Seitenbohrung (14) im Mittenprofilstück eine Gewindebohrung zur Aufnahme einer konventionellen einschraubbaren Heißkanaldüse (6) vorhanden ist.

7. Heißkanal-Verteilersystem nach einem der vorhergehenden Ansprüche, **dadurch gekennzeichnet**, daß die an mindestens einer Außenseite der Profilstücke vorhandenen Nuten für die Rohrheizkörper aus zwei vorzugsweise parallel verlaufenden Nuten (12,22,32,42) bestehen, die
- beim Mittenprofilstück (1) sich bis zu beiden Stirnseiten erstrecken,
- beim Angußbuchsenprofilstück (3) und der Heißkanalprofildüse (4) sich bis zu der zur Anlage an das Mittenprofilstück beziehungsweise das Umlenkprofilstück bestimmten Stirnseite erstrecken und am anderen Ende dieser beiden Profilstücke vorzugsweise bogenförmig ineinander übergehen, und
- beim Umlenkprofilstück (2) unter Ausführung eines Bogens von 90 Grad sich von der einen Stirnseite, an der der Fließkanal mündet, zu der anderen Stirnseite, an der Fließkanal mündet, erstrecken und/oder sich von der am Mittenprofilstück anliegenden Stirnseite zur gegenüberliegenden Stirnseite erstrecken und bogenförmig miteinander verbunden sind.

8. Heißkanal-Verteilersystem nach einem der vorhergehenden Ansprüche, **dadurch gekennzeichnet**, daß ein Mittenprofilstück (1) dort, wo sein Fließkanal mit einer durchgehenden Seitenbohrung (16) versehen ist, mit Nutabschnitten (52) zur Aufnahme von Rohrheizkörpern versehen ist, die zwei Stellen der einen parallelen Nut (12) derart bis zur Seitenwand führen, daß die Nutenden in die Nuten eines an die Seitenbohrung (16) angeschlossenen anderen Profilstückes (3) übergehen.

9. Heißkanal-Verteilersystem nach einem der vorhergehenden Ansprüche, **dadurch gekennzeichnet**, daß die mit Nuten für die Rohrheizkörper versehenen Seiten der Profilstücke durch Abdeckbleche (15) abgedeckt sind.

10. Heißkanal-Verteilersystem nach einem der vorhergehenden Ansprüche, **dadurch gekennzeichnet**, daß zur Dichtung zwischen angrenzenden Flächen zweier Profilstücke zylindrische Profildichtungen (7) oder O-Ringe (55) eingesetzt sind, die den Fließkanal (11) umgeben.
